# EUROPÄISCHE PATENTSCHRIFT

(11) **EP 3 688 488 B1**
(45) Veröffentlichungstag und Bekanntmachung des Hinweises auf die Patenterteilung: **13.08.2025**
(21) Anmeldenummer: 18765426.4
(22) Anmeldetag: 04.09.2018
(51) Int. Cl.: G01S 13/931, G01S 7/03, G01S 13/86, G01S 7/02

(54) **VERFAHREN UND RADARSENSOR ZUR REDUKTION DES EINFLUSSES VON STÖRUNGEN BEI DER AUSWERTUNG MINDESTENS EINES EMPFANGSSIGNALS**
METHOD AND RADAR SENSOR FOR REDUCING THE INFLUENCE OF INTERFERENCE IN THE EVALUATION OF AT LEAST ONE RECEIVED SIGNAL
PROCÉDÉ ET CAPTEUR DE RADAR DESTINÉ À LA RÉDUCTION DE L'INFLUENCE DE BROUILLAGE LORS DE L'ÉVALUATION D'AU MOINS UN SIGNAL DE RÉCEPTION

(30) Priorität: 25.09.2017 DE 102017216867
(43) Veröffentlichungstag der Anmeldung: 05.08.2020
(73) Patentinhaber: Robert Bosch GmbH, 70442 Stuttgart (DE)
(72) Erfinder: SCHOOR, Michael, 70195 Stuttgart (DE); MAYER, Marcel, 89173 Lonsee (DE); BAUR, Klaus, 88487 Mietingen (DE); PIETSCH, Andreas, 74321 Bietigheim-Bissingen (DE)
(86) Internationale Anmeldenummer: PCT/EP2018/073700
(87) Internationale Veröffentlichungsnummer: WO 2019/057480

(56) Entgegenhaltungen:
- WO-A1-2016/168334
- DE-A1- 102012 111 933
- DE-A1- 102017 103 977
- DE-T2- 69 834 710
- US-A1- 2006 109 170
- US-A1- 2009 121 918
- US-A1- 2015 097 730

## Beschreibung

Die vorliegende Erfindung betrifft einen Radarsensor und ein Verfahren zur Reduktion des Einflusses von Störungen bei der Auswertung mindestens eines Empfangssignals eines Radarsensors, insbesondere eines in einem Fahrzeug verbauten Radarsensors, in dem in vorbestimmten Betriebssituationen vorbestimmte Sendesignale ausgesandt und reflektierte Teilsignale empfangen werden und die zu den vorbestimmten Betriebssituationen empfangenen Signale zur Bestimmung eines Störspektrums abgespeichert werden und durch Berücksichtigung des Störspektrums bei der Signalauswertung der Einfluss von Störungen reduziert wird.

### Stand der Technik

Aus der DE 10 2009 053 395 A1 ist ein System und ein Verfahren zur Überwachung von Zielobjekten mittels einer Sensoranordnung bekannt, in dem zur flexiblen Auswertung von über die Sensoranordnung bestimmten ersten Zielparametern zu den verschiedenen Zielobjekten die Generierung, Abspeicherung und Überprüfung gesonderter, benutzerdefinierbarer Prüfprofile vorgesehen ist, ohne dass ein Eingriff in sicherheitsrelevante Systemkomponenten erforderlich wird.

Aus der DE 698 34 710 T2 ist ein Radarsystem bekannt. Die US 2009/121918 A1 betrifft ein Radargerät mit vereinfachter Unterdrückung von Interferenzsignalkomponenten. Die WO 2016/168334 A1 betrifft Lärmverminderung bei Radargeräten. Die US 2015/097730 A1 bezieht sich auf einen Radarsensor mit einem Radom. Die US 2006/109170 A1 betrifft die Leistungssteuerung bei Radarsensoren. Die DE 10 2012 111933 A1 betrifft das automatische Erkennen und Interpretieren von Lichtsignalanlagen.

### Offenbarung der Erfindung

Der Kern der vorliegenden Erfindung ist es, Störungen des Sensors aufgrund seines Verbaus, insbesondere hinter einem Fahrzeugkarosserieteil, zu erkennen und derartige Störsignale während dem Empfang von Objektsignalen zu kompensieren. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafter Weise ist vorgesehen, dass das Verfahren für jeden Empfangskanal des Radarsensors separat durchgeführt wird. Durch dieses Merkmal kann ein mehrkanaliger Radarsensor für jeden Kanal individuell hinsichtlich stattfindender Störungen durch Mehrfachreflexion separat kalibriert werden, so dass das Gesamtergebnis der Empfangssignale einen geringeren Störpegel aufweist, als wenn die Kalibrierung für alle Empfangskanäle gemeinsam stattfinden würde.

Weiterhin ist es vorteilhaft, dass der Radarsensor hinter Fahrzeugkarosserieteilen angeordnet ist. Moderne Kraftfahrzeuge möchten an der Front oder am Heck verbaute Radarsensoren möglichst so anordnen, dass diese hinter Fahrzeugschürzen, Stoßstangen oder anderen Karosserieteilen verdeckt verbaut werden, so dass das äußere Erscheinungsbild des Fahrzeugs durch die Sensoren nicht verändert wird. Dabei ist es insbesondere vorteilhaft, dass die Fahrzeugkarosserieteile, hinter denen der Radarsensor angeordnet ist, Karosserieteile sind, die aus Kunststoff gefertigt wurde. Kunststoff lässt sich aus Materialmischungen herstellen, die die abgestrahlte und empfangene Radarstrahlung weitgehendst unverändert passieren lassen, so dass durch die Karosserieteile selbst die abgestrahlten und empfangenen elektromagnetischen Signale möglichst wenig beeinflusst und damit gestört werden. Zusätzlich oder alternativ kann es dabei vorteilhaft sein, dass die Karosserieteile lackierte Karosserieteile sind, insbesondere dass es sich bei den Lackschichten um Metallic-Lacke handelt, in denen teilweise Metallpartikel vorhanden sind. Derartige Lackschichten, insbesondere solche mit Metallteilchen, weisen teilweise eine hohe Reflektivität für elektromagnetische Strahlung auf, so dass lackierte Fahrzeugteile, insbesondere mit Metallic-Lacken lackierte Fahrzeugteile, zu Störungen der Sensorsignale führen können.

Weiterhin ist es vorteilhaft, dass die Störungen Empfangssignale sind, die durch Mehrfachreflexionen zwischen dem Karosserieteil und dem Sensorradom entstehen. Durch das Anordnen der Radarsensoren hinter Karosserieteilen passieren Empfangssignale des Radarsensors zuerst das Karosserieteil und danach das Radom des Radarsensors. Dabei kann es zwischen Radomoberfläche und Innenseite der Fahrzeugkarosserieteile zu hin- und herlaufenden Wellen kommen, so dass Mehrfachreflexionen entstehen, die die Empfangssignale, die durch den Radarsensor erwünschterweise empfangen werden, gestört werden und eine zuverlässige Zielobjekterkennung gestört wird.

Erfindungsgemäß ist vorgesehen, dass die vorbestimmten Betriebssituationen der Stillstand des Fahrzeugs ist. Wenn das Fahrzeug im Stillstand steht, bewegt sich das Fahrzeugumfeld relativ zum Fahrzeug nicht mehr, so dass ortsfeste Objekte auch durch den Fahrzeugsensor als stehende Objekte ermittelt werden. Im Fahrbetrieb bewegen sich auch stehende Objekte relativ zum Sensor, so dass Abstandswerte und Relativgeschwindigkeitswerte veränderlich sind. Im Stillstand können stehende Objekte jedoch als Objekte mit konstantem Abstandswert und einer Relativgeschwindigkeit gleich Null über viele Messzyklen hinweg erkannt werden und mittels derartiger stehender Objekte eine vorteilhafte Sensorkalibrierung durchgeführt werden. Eine derartige Betriebssituation ergibt sich beispielsweise beim Halt des Fahrzeugs an roten Ampeln, so dass während dem Fahrbetrieb in derartigen Stillstandspausen Störungen durch Mehrfachreflexionen der Empfangssignale regelmäßig neu kalibriert werden können. Ein Stillstand des Fahrzeugs vor einer Ampel ist beispielsweise durch Verwendung von Daten einer Navigationsdatenbank möglich, in der abgelegt ist, an welcher Kreuzung Ampelregelungen vorgesehen sind. Hält das eigene Fahrzeug vor einer derartigen Kreuzung an, so kann daraus geschlossen werden, dass das Fahrzeug momentan vor einer roten Ampel hält. Zusätzlich oder alternativ hierzu ist es auch möglich, dass das Fahrzeug eine Kamera aufweist, die an der Vorderseite des Fahrzeugs in Fahrtrichtung orientiert ist und das Fahrzeugvorfeld aufnimmt. Eine derartige Fahrzeugfrontkamera kann beispielsweise Ampeln und damit rote Ampelphasen erkennen und somit eine Sensorkalibrierung starten und rechtzeitig abbrechen, bevor das Fahrzeug nach einem Umschalten auf grünes Ampellicht wieder anfährt.

Weiterhin ist es vorteilhaft, dass die vorbestimmten Sendesignale Signale mit einer genau vorbestimmten Signalform und Signalleistung sind. Die während der vorbestimmten Betriebssituationen ausgestrahlten Sendesignale sollten mit hoher Genauigkeit hinsichtlich Signalform und Signalleistung ausgestrahlt werden, so dass man anhand der Empfangssignale möglichst exakt die Störungen durch Mehrfachreflexionen erkennen kann und damit eine möglichst exakte Kalibrierung für den Fahrbetrieb durchführen kann.

Weiterhin ist es vorteilhaft, dass Verfahren für jeden Empfangskanal des Radarsensors getrennt durchgeführt wird.

Weiterhin ist es vorteilhaft, dass die Empfangssignale der vorbestimmten Sendesignale über mehrere Signalzyklen gemittelt werden. Dieses Merkmal hat den vorteilhaften Effekt, dass häufig vorkommende Störungen im Kalibriersignal stärker berücksichtigt werden, als nur selten vorkommende Störungen, die beispielsweise bei mehreren Signalzyklen nur einmal erscheinen. Damit lässt sich ein Kalibriersignal erzeugen, das die Häufigkeit der vorkommenden Störungen nach ihrer Häufigkeit gewichtet und damit unterschiedlichen Fahrsituationen optimal entsprechen kann.

Weiterhin ist es vorteilhaft, dass die gemittelten Signale zu dem bisherigen Korrektursignal hinzuaddiert werden. Wird bei Fahrzeugstillstand eine neue Sensorkalibrierung durchgeführt, so muss das bisherige Korrektursignal nicht gelöscht und durch das neue Signal ersetzt werden, sondern es ist möglich, das neu ermittelte Kalibriersignal, gegebenenfalls mit einer entsprechenden Gewichtung, dem bereits bestehende Kalibriersignal hinzuzuaddieren. Hierdurch wird erreicht, dass Kalibriersignale, die Störungsbilder kompensieren, durch einen Kalibriervorgang nicht völlig neu bestimmt werden, so dass Fehlmessungen während dem Kalibriervorgang weniger dramatische Auswirkungen für den folgenden Fahrbetrieb haben, da Ausreißer nur mit einer geringen Gewichtung in das Korrektursignal eingehen und häufig vorkommende Störungen mit einer großen Gewichtung berücksichtigt werden. Dabei ist es möglich, für jeden jeweiligen Empfangskanal ein gemitteltes Signal zu ermitteln und ein Korrektursignal für jeden Empfangskanal separat zu bestimmen und bei einer neuen Kalibrierung die gewichtete Addition des neuen Kalibriersignals für jeden Empfangskanal separat durchzuführen.

Weiterhin ist es vorteilhaft, dass der Radarsensor mehrere Empfangskanäle aufweist und das Störspektrum für jeden Kanal separat erfasst und/oder separat abgespeichert und/oder separat berücksichtigt wird. Hierdurch ist es möglich, kanalspezifische Störungen zu ermitteln und für jeden Kanal separat durch das Korrektursignal aus den Empfangssignalen herauszueleminieren.

Weiterhin ist es vorteilhaft, dass für jeden der mehreren Empfangskanäle eine separate Speichereinrichtung oder ein separater Bereich einer gemeinsamen Speichereinrichtung vorgesehen ist, innerhalb dem für jeden Empfangskanal ein eigenes Störspektrum abgespeichert ist. So kann man für jeden Empfangskanal ein Störspektrum in einem speziell dafür reservierten Speicher abspeichern oder aber bei Verwendung eines gemeinsamen Speichers für alle Störspektren der mehreren Empfangskanäle diese verschiedenen Spektren in einer Speichereinrichtung ablegen.

Weiterhin ist es vorteilhaft, dass das Mittel zur Erkennung der mindestens einen vorbestimmten Betriebssituation zur Zuführung eines Signals zum Radarsensor ist. Dabei kann vorgesehen sein, dass das Signal, das dem Radarsensor zugeführt wird, ein Signal ist, das den Stillstand des Fahrzeugs repräsentiert, beispielsweise indem ein Raddrehzahlfühler ausgewertet wird oder ein Videobild ausgewertet wird oder ein Tachosignal ausgewertet wird. Weiterhin kann die vorbestimmte Betriebssituation erkannt werden, indem dem Radarsensor ein Signal zugeführt wird, das die Erkennung einer für das Fahrzeug geltenden roten Ampel ist. Hierzu ist vorteilhafter Weise vorgesehen, dass eine Kamera im Frontbereich des Fahrzeugs vorgesehen ist, die das Fahrzeugvorfeld in Fahrtrichtung aufnimmt und eine rote Ampel am Fahrbahnrand oder eine über der Fahrspur hängende rote Ampel erfassen kann, der eigenen Fahrspur zuordnet und damit erkennen kann, dass der Stillstand des Fahrzeugs vor einer roten Ampel stattfindet und gegebenenfalls wie lange das Fahrzeug noch im Stillstand stehen bleibt. Wurde eine vorbestimmte Betriebssituation erkannt, so wird das Aussenden der vorbestimmten Sendesignale zur Sensorkalibrierung gestartet und die dann empfangenen Empfangssignale, insbesondere die Empfangssignale, die an stehenden bzw. ortsfesten Objekten reflektiert wurden, ausgewertet und nach Mehrfachreflexionen im Empfangssignal gesucht, die zur Ermittlung des Korrektursignals ausgewertet werden.

Weiterhin ist es vorteilhaft, dass der Radarsensor hinter einem Fahrzeugkarosserieteil angeordnet ist. Dabei kann es vorteilhaft sein, dass das Karosserieteil aus Kunststoff gefertigt sind, da hierdurch die elektromagnetische Strahlung die durch Sende- und Empfangssignale ausgesandt und empfangen wird, kaum beeinträchtigt wird. Besonders vorteilhaft kann die Erfindung sein, wenn der Radarsensor in einer Situation eingesetzt wird, in der die Karosserieteile lackiert sind, insbesondere mittels Metallic-Lacken lackiert sind, die Metallteilchen beinhalten, da hierdurch die Lackschichten eine erhöhte Reflektivität aufweisen und das Empfangssignal besonders zu Störungen neigt. Durch das erfindungsgemäße Verfahren und die erfindungsgemäße Vorrichtung können derartige Störungen besonders effizient reduziert oder sogar vermieden werden.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch eine auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüche oder deren Rückbeziehung sowie unabhängig von ihrer Formulierung bzw. Darstellung in der Beschreibung bzw. in den Zeichnungen.

### Kurze Beschreibung der Zeichnungen

Nachfolgend werden Ausführungsbeispiele der Erfindung anhand von Zeichnungen erläutert. Es zeigen
- Figur 1: eine schematische Darstellung eines hinter einem Fahrzeugkarosserieteil verbaute Radarsensors mit entstehenden Mehrfachreflexionen,
- Figur 2: eine schematische Darstellung der Auswirkung von Störungen im Frequenzspektrum,
- Figur 3: eine Ausführungsform des Empfangsteils der erfindungsgemäßen Vorrichtung und
- Figur 4: ein schematisches Ablaufdiagramm zur Erläuterung des erfindungsgemäßen Verfahrens.

### Ausführungsformen der Erfindung

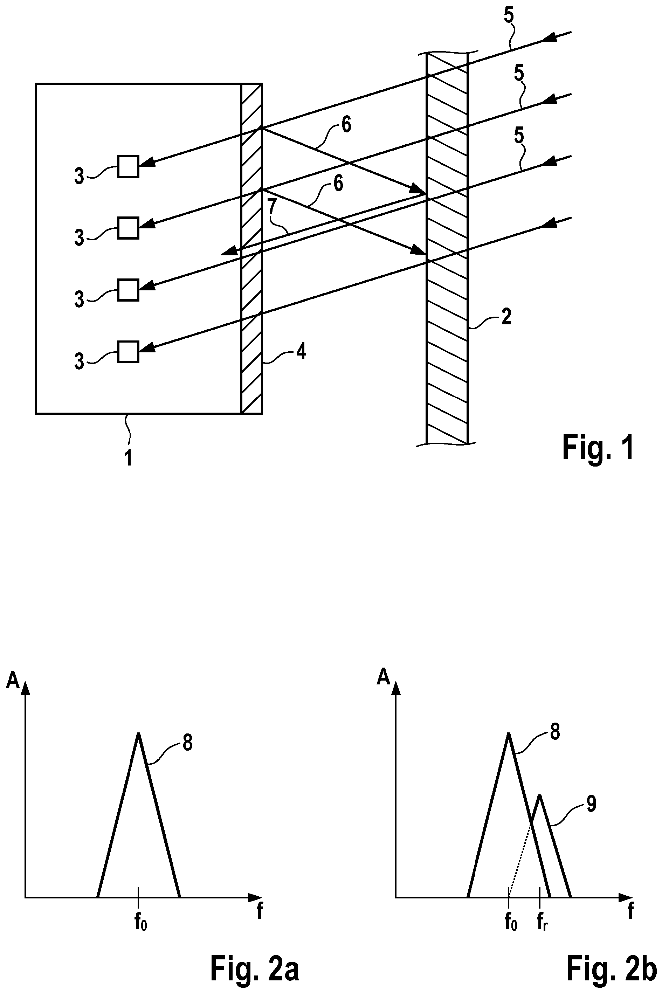

In Figur 1 ist schematisch ein Radarsensor 1 dargestellt. Der Radarsensor 1 besteht aus einem halbschaligen Gehäuse, das an der Vorderseite mit einem Radom 4 verschlossen ist. Das Radom 4 kann dabei eine Fokussierung beispielsweise in Form einer dielektrischen Linse aufweisen oder ohne eine Fokussierung ausgeführt sein, so dass die abgestrahlte und empfangene elektromagnetische Strahlung ohne Veränderung des Strahlengangs das Radom 4 durchdringt. Weiterhin ist vor dem Radarsensor 1 mit dem Radom 4 ein Karosserieteil 2 dargestellt, das vorteilhafterweise ein Kunststoffkarosserieteil ist, oftmals auch in Wagenfarbe mit Metallpartikeln lackiert. Durch den Verbau des Radarsensors 1 hinter dem Karosserieteil 2 ist der Radarsensor 1 für den Betrachter nicht sichtbar, so dass eine Störung des optischen Eindrucks des Fahrzeugs durch Sensoren am Fahrzeug nicht beeinträchtigt wird. Der Radarsensor 1 verfügt in seinem Inneren über Antennen, insbesondere über Empfangsantennen 3. Mittels der Empfangsantennen 3 können Empfangssignale empfangen werden, die zuvor mittels einer nicht dargestellten Sendeantenne abgestrahlt wurden und an Objekten im Sensorerfassungsbereich reflektiert wurden. Derartige Empfangsstrahlen, die an Objekten innerhalb des Sensorerfassungsbereichs reflektiert wurden, sind durch die Strahlen 5 dargestellt. Diese elektromagnetische Strahlung, die als Empfangsstrahlen einfallen, durchdringen das Karosserieteil 2, das aus einem Material hergestellt wurde, das den Strahlengang der elektromagnetischen Strahlung möglichst wenig beeinflusst. Weiterhin ist das Karosserieteil 2 so lackiert und gegebenenfalls mit zusätzlichen Beschichtungen versehen, dass die Empfangsstrahlen 5 in Form elektromagnetischer Strahlung möglichst vollständig das Karosserieteil 2 durchdringen und möglichst wenig Strahlung wegreflektiert wird. Nach Passieren des Karosserieteils 2 fällt die elektromagnetische Strahlung der Empfangsstrahlen 5 auf das Radom 4 des Radarsensors 1, wobei ein erster Teil der Empfangsenergie das Radom 4 durchdringt und von den Empfangsantennen 3 als Empfangssignale aufgenommen werden kann. Ein zweiter Teil der Empfangsstrahlen 5 wird an der Radomoberfläche reflektiert und als reflektierte Teilstrahlen 6 in einem Ausfallswinkel in Richtung Karosserieteil 2 zurückreflektiert. Diese Teilstrahlung 6 trifft wiederum auf die Innenseite des Karosserieteils 2 und kann dort abermals reflektiert werden, wobei im ungünstigsten Fall diese weitere Reflexion fast die vollständige reflektierten Teilstrahlen 6 doppelt reflektierten Teilstrahlen 7 reflektiert. Diese doppelt reflektierten Teilstrahlen bewegen sich fast parallel zu den ursprünglichen Empfangsstrahlen 5 und durchdringen zum großen Teil das Radom 4, so dass diese ebenfalls von den Empfangsantennen 3 empfangen und ausgewertet werden. Die Empfangsantennen 3 empfangen demnach die direkt empfangene Empfangsstrahlung 5, jedoch auch die doppelt oder sogar mehrfach reflektierten Teilstrahlen, die in Form von Echos empfangen werden und bezüglich des gewollten Empfangssignals ein Störsignal darstellen. Diese Störsignale durch Mehrfachreflexionen sollten vermieden werden, um eine möglichst zuverlässige Funktionsweise des Radarsensors 1 zu gewährleisten und eine zuverlässige Objektdetektion durchführen zu können.

Die Empfangssituation wie gemäß Figur 1 dargestellt, führt nach Auswertung der Empfangsstrahlen 5 zu Frequenzspektren, wie sie beispielhaft in Figur 2a und 2b dargestellt sind. So ist in Figur 2a auf der Abszisse die Frequenz f aufgetragen und auf der Ordinate die Intensität A aufgetragen. Wird das Empfangssignal 5 empfangen, ohne dass Mehrfachreflexionen 6, 7 auftreten, so ergibt sich ein beispielhaft dargestelltes Zwischenfrequenzsignal 8 bei der Mittenfrequenz f₀, was ohne Störung ausgewertet und analysiert werden kann. Im Fall, dass Mehrfachreflexionen 6, 7 auftreten und das Empfangssignal 5 überlagern, ergibt sich ein Zwischenfrequenzsignal wie in Figur 2b dargestellt. Auch hier wurde auf der Abszisse wiederum die Frequenz f und auf der Ordinate die Amplitude A des Zwischenfrequenzsignals dargestellt. In Figur 2b ist wieder, gleich wie in Figur 2a, ein beispielhaftes Zwischenfrequenzsignal 8 dargestellt, das wieder eine Mittenfrequenz f₀ aufweist. Durch die Mehrfachreflexionen 6, 7 ergibt sich ein Störspektrum 9, das eine geringere Amplitude A als das ungestörte Zwischenfrequenzsignal 8 aufweist und eine Mittenfrequenz fᵣ aufweist. Da die Mittenfrequenz fᵣ des Störspektrums 9 von der Mittenfrequenz f₀ des Zwischenfrequenzspektrums 8 nur gering beabstandet ist, überlappen sich beide Spektren in weiten Frequenzbereichen, so dass das Störspektrum 9 bzw. die Mehrfachreflexionen aus dem Empfangssignal nicht ausgefiltert werden können. Sendet man während bestimmter Betriebszustände, insbesondere im Stillstand des Fahrzeugs vorbekannte Signale als Sendesignale aus, so ist die Form und Intensität des gestörten Zwischenfrequenzspektrums 8 bekannt. Überlagern sich während dieser Messung die Störeinflüsse 9, so kann man durch Differenzbildung während der vorbestimmten Betriebssituationen das momentane Störspektrum ermitteln und abspeichern. Durch Subtraktion des Störsignals vom gestörten Empfangsspektrum 8, wie in Figur 2b dargestellt, kann man Störungen aufgrund der Mehrfachreflexionen 6, 7 weitgehend eliminieren und damit eine zuverlässigere und genauere Bestimmung der Objektdaten aus dem Empfangssignal bestimmen.

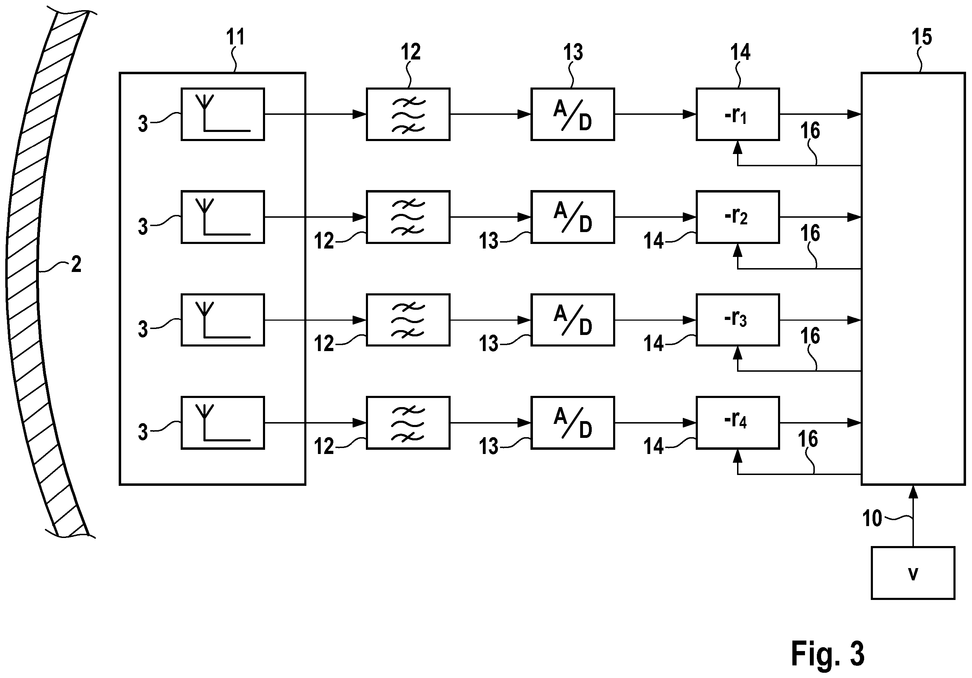

In Figur 3 ist eine schematische Ausführungsform der erfindungsgemäßen Vorrichtung dargestellt. So ist linkerhand das Karosserieteil 2 dargestellt, das den Radarsensor 1 abdeckt. Hinter dem Karosserieteil 2 ist der Radarsensor 1 mit einem Radom 4, das mit oder ohne Fokussierung ausgeführt ist, angeordnet. Das Gehäuse des Radarsensors 1 ist, wie das Radom 4, in Figur 3 aus Gründen der Übersichtlichkeit nicht dargestellt. Der beispielhaft dargestellte Radarsensor 1 weist vier Empfangskanäle auf, die parallel Empfangssignale verarbeiten und auswerten. So ist ein Empfangsbaustein 11 dargestellt, der beispielsweise ein Hochfrequenzmodul des Radarsensors 1 sein kann. Dieses Hochfrequenzmodul 11 weist drei Empfangsantennen auf, die die Empfangsstrahlen 5 empfangen und dabei auch durch Mehrfachreflexionen 6, 7 der Empfangsstrahlen überlagert werden. Diese gestörten Empfangssignale werden von den Empfangsantennen 3 einem Empfangsfilter 12 weitergeleitet, wobei für jeden Empfangskanal ein eigenes Empfangsfilter 12 vorgesehen ist. Dieses Empfangsfilter 12 kann beispielhaft ein Bandpassfilter sein, das ungewünschte Frequenzanteile aus dem Empfangsspektrum herausfiltert. Dieses Empfangsfilter 12 ist jedoch nicht in der Lage, das größtenteils überlagerte Störsignal 9 aus dem Empfangssignal 8 herauszufiltern. Das gefilterte Empfangssignal wird in jedem Empfangskanal vom Empfangsfilter 12 an einen Analog/Digital-Wandler 13 ausgegeben, wobei auch hier wiederum für jeden Empfangskanal ein separater Analog/Digital-Wandler 13 vorgesehen ist. In einer alternativen Ausführungsform kann auch ein sehr leistungsfähiger Analog/Digital-Wandler 13 sämtliche Kanäle abtasten, indem dieser nacheinander die Empfangskanäle abtastet. In einer bevorzugten Ausführungsform werten die die Analog/Digital-Wandler 13 für jeden Kanal parallel und zeitgleich die gefilterten Empfangssignale in Digitalsignale um. In der nachfolgenden Subtraktionseinrichtung 14, die wiederum beispielhaft für jeden Empfangskanal separat ausgeführt ist, wird ein Störsignal 16 von einer Auswerte- und Berechnungseinrichtung 15 zugeführt. Diese Zuführung des berechneten und zuvor ermittelten Störsignals r₁, r₂, r₃, r₄ geschieht mittels einer Ausgabeleitung 16 für das Störspektrum rₓ von der Auswerte- und Berechnungseinrichtung 15, wo die Störspektren r₁, r₂, r₃, r₄ für jeden Empfangskanal in einer Speichereinrichtung abgelegt sind. Durch Subtraktion des jeweiligen Störspektrums rₓ in der Subtraktionseinrichtung 14 wird ein kurz zuvor ermitteltes Störspektrum, das sich aufgrund der Mehrfachreflexionen 6, 7 ergibt, vom momentanen Empfangssignal abgezogen, so dass ein möglichst störfreies Empfangssignal von der Subtraktionseinrichtung 14 an die Auswerte- und Berechnungseinrichtung 15 ausgegeben wird. In der Auswerte- und Berechnungseinrichtung 15 werden die Empfangssignale hinsichtlich erkannter Objekte ausgewertet und beispielsweise Listen mit erkannten Objekten im Fahrzeugumfeld erzeugt, die für weitere Fahrzeugfunktionen, beispielsweise für Notbremsfunktionen oder adaptive Abstands- und Geschwindigkeitsregelfunktionen herangezogen werden. Bleibt das Fahrzeug stehen, weil es beispielsweise vor einer roten Ampel anhält, so wird dies durch den Geschwindigkeitssensor v, der beispielsweise ein Raddrehzahlfühler sein kann, erkannt und ein Geschwindigkeitssignal 10 an die Auswerte- und Berechnungseinrichtung 15 ausgegeben. Dies sorgt dafür, dass in der Auswerte- und Berechnungseinrichtung 15 die Auswertung der Empfangssignale unterbrochen wird und standardisierte Sendesignale durch die nicht dargestellten Sendeantennen abgestrahlt werden. Die während dieser vorbestimmten Betriebssituation empfangenen Empfangssignale 5 werden durch die Empfangsantennen 3 empfangen und über die Empfangsfilter 12 und Analog/Digital-Wandler 13 den Subtraktionseinrichtungen 14 zugeführt. Beispielsweise kann während dieser vorbestimmten Betriebssituationen die Ausgabe der Störspektren rₓ über die Ausgabeleitungen 16 unterbrochen werden. Somit erhält die Auswerte- und Berechnungseinrichtung 15 während der vorbestimmten Betriebssituationen Empfangssignale, die von vorbestimmten Sendesignalen stammen und in denen die Störspektren 9 aufgrund von Mehrfachreflexionen vorhanden sind. In der Auswerte- und Berechnungseinrichtung 15 kann daraufhin für jeden Empfangskanal ein Störspektrum rₓ ermittelt und abgespeichert werden und bei Wiederanfahren des Fahrzeugs als neues Störspektrum rₓ über die Ausgabeleitung 16 der Subtraktionseinrichtung 14 zugeführt werden, so dass die während dem Fahrbetrieb empfangenen Empfangssignale durch aktualisierte Störspektren kompensiert werden können.

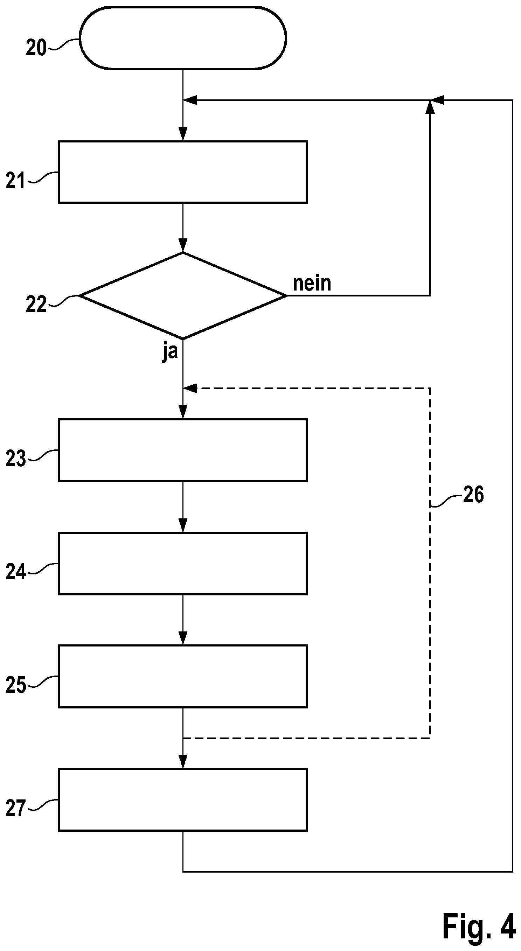

In Figur 4 ist das schematische Ablaufdiagramm zur Verdeutlichung des erfindungsgemäßen Verfahrens dargestellt. Das Verfahren startet in Schritt 20, beispielsweise bei Inbetriebnahme des Radarsensors oder bei Inbetriebnahme des Fahrzeugs durch Einschalten der Zündung. Nach Start des Verfahrens in Schritt 20 wird im darauffolgenden Schritt 21 die aktuelle Fahrgeschwindigkeit v eingelesen. Dabei kann die Fahrgeschwindigkeit beispielsweise von einem Drehzahlfühler an einem Fahrzeugrad oder von einem Satellitennavigationssystem stammen oder von einem Radarsensor stammen, der die Relativgeschwindigkeit zu stehenden Objekten misst. Im folgenden Schritt 22 wird geprüft, ob die momentane Geschwindigkeit v = 0 ist. Ist v = 0, so befindet sich das Fahrzeug momentan im Stillstand. Bei v ≠ 0 bewegt sich das Fahrzeug und hat eine Relativgeschwindigkeit größer oder kleiner Null bezüglich der erkannten, stehenden Objekte, je nachdem in welche Richtung positive bzw. negative Relativgeschwindigkeiten definiert sind. In diesem Fall verzweigt Schritt 22 nach "Nein" und das Verfahren wird in Schritt 21 mit erneutem Einlesen der Fahrgeschwindigkeit v fortgeführt. In dieser Zeit werden Sendesignale durch den Radarsensor ausgesandt und reflektierte Teilwellen empfangen und aufgrund der detektierten Objekte eine Notbremsfunktionalität, eine adaptive Abstandsregelung oder eine sonstige Fahrerassistenzfunktion ausgeführt. Wird in Schritt 22 festgestellt, dass das Fahrzeug momentan im Stillstand ist, also v = 0 ist, so verzweigt Schritt 22 nach "Ja" und wird in Schritt 23 weitergeführt, indem standardisierte Sendesignale ausgesandt werden. Diese standardisierten Sendesignale sind Sendesignale, die in Modulationsform und Sendeintensität sehr genau festgelegt wurden. Im folgenden Schritt 24 werden Empfangssignale der standardisierten Sendesignale empfangen, wobei diese Empfangssignale auch Mehrwegereflexionen 6, 7 aufweisen, die zu Störspektren 9 führen, die mit den Nutzspektren 8 überlagert sind. In Schritt 25 werden diese Empfangssignale der standardisierten Sendesignale abgespeichert und optional über mehrere Zyklen aufaddiert. Nach Schritt 25 ist es möglich, dass die standardisierten Sendesignale abermals ausgesandt werden, sofern sich das Fahrzeug noch immer im Stillstand befindet, weshalb das Ablaufdiagramm nach Schritt 25 gemäß der gestrichelten Linie 26 zu Schritt 23 zurückspringt. Dabei kann beispielsweise vorgesehen sein, dass diese Schleife n-mal wiederholt wird, so dass z.B. n=20 oder n=50 standardisierte Sendesignalzyklen durchlaufen werden. Durch das Aufaddieren dieser Empfangssignale der standardisierten Sendesignale können Störungen, die beispielsweise nur bei wenigen Zyklen der n Wiederholungen aufgetreten sind, durch geringere Gewichtung weggemittelt werden und die Störungsmuster, die regelmäßig auftreten, werden durch stärkere Gewichtung im zu ermittelnden Störsignal 9 berücksichtigt. Nach Abschluss der optional vorgesehenen n Wiederholungen wird das Verfahren in Schritt 27 weitergeführt, indem das momentane Störspektrum 9 aufgrund der momentanen Reflexionssituation aktualisiert wurde und diese neue Störspektren r₁, r₂, r₃, r₄, die für jeden Empfangskanal separat ermittelt wurde, zur Kompensation der Störungen in den Empfangssignalen verwendet werden. Nach Schritt 27 wird das Verfahren in Schritt 21 fortgeführt, indem Sendesignale ausgesandt werden und von den Empfangssignalen das aktualisierte neue Störspektrum 9 in der Auswertung durch Subtraktion angewendet wird, um Mehrfachreflexionen im Empfangssignal zu kompensieren.

## Patentansprüche

1. Verfahren zur Reduktion des Einflusses von Störungen bei der Auswertung mindestens eines Empfangssignals (5) eines in einem Fahrzeug verbauten Radarsensors (1), wobei
in vorbestimmten Betriebssituationen vorbestimmte Sendesignale ausgesandt und doppelt oder mehrfach reflektierte Teilsignale (5) empfangen werden
und die zu den vorbestimmten Betriebssituationen empfangenen Signale (5) zur Bestimmung eines Störspektrums (r₁, r₂, r₃, r₄) abgespeichert werden und durch Berücksichtigung des Störspektrums (r₁, r₂, r₃, r₄) bei der Signalauswertung der Einfluss von Störungen (7, 9) reduziert wird,
**dadurch gekennzeichnet, dass** die vorbestimmten Betriebssituationen der Stillstand des Fahrzeugs vor Ampeln ist, wobei wenn die vorbestimmte Betriebssituation erkannt wird, das Aussenden der vorbestimmten Sendesignale zur Sensorkalibrierung gestartet wird und die dann empfangenen Empfangssignale, die an stehenden oder ortsfesten Objekten reflektiert werden, ausgewertet werden und nach Mehrfachreflexionen im Empfangssignal gesucht wird, die zur Ermittlung eines Korrektursignals ausgewertet werden.

2. Verfahren nach Anspruch 1, **dadurch gekennzeichnet, dass** das Verfahren für jeden Empfangskanal des Radarsensors (1) separat durchgeführt wird.

3. Verfahren nach Anspruch 1 oder 2, **dadurch gekennzeichnet, dass** der Radarsensor (1) hinter lackierten Karosserieteilen (2), welche aus Kunststoff gefertigt sind, angeordnet ist.

4. Verfahren nach Anspruch 3, **dadurch gekennzeichnet, dass** die Störungen (7, 9) Empfangssignale (5) sind, die durch Mehrfach-Reflektionen (6, 7) zwischen dem Karosserieteil (2) und dem Sensorradom (4) entstehen.

5. Verfahren nach einem der vorhergehenden Ansprüche, **dadurch gekennzeichnet, dass** die vorbestimmten Sendesignale Signale mit einer genau vorbestimmten Signalform und Signalleistung sind.

6. Verfahren nach einem der vorhergehenden Ansprüche, **dadurch gekennzeichnet, dass** das Verfahren für jeden Empfangskanal des Radarsensors (1) getrennt durchgeführt wird.

7. Verfahren nach einem der vorhergehenden Ansprüche, **dadurch gekennzeichnet, dass** die Empfangssignale (5) der vorbestimmten Sendesignale über mehrere Signalzyklen (26) gemittelt werden.

8. Verfahren nach Anspruch 7, **dadurch gekennzeichnet, dass** die gemittelten Signale zu dem bisherigen Korrektursignal hinzuaddiert werden.

9. Radarsensor (1), mit Einrichtungen zur Reduktion des Einflusses von Störungen (r₁, r₂, r₃, r₄) bei der Auswertung mindestens eines Empfangssignals (5) des in einem Fahrzeug verbauten Radarsensors (1), wobei Mittel (10, 21, 22) vorgesehen sind, mittels denen mindestens eine vorbestimmte Betriebsituation erkannt wird, dass Sendeeinrichtungen vorgesehen sind, die bei Erkennung des Vorliegens mindestens einer der vorbestimmten Betriebssituationen vorbestimmte Sendesignale aussendet und Empfangseinrichtungen (3, 11, 12, 13, 14) vorgesehen sind, die doppelt oder mehrfach reflektierte Teilsignale (5) empfangen und
Mittel (15) vorgesehen sind, in denen mindestens ein Störspektrum (r₁, r₂, r₃, r₄) abgespeichert ist und in dem die zu den vorbestimmten Betriebssituationen empfangenen Signale zur Bestimmung des Störspektrums (r₁, r₂, r₃, r₄) abgespeichert werden und
mindestens ein Berechnungsmittel (15) vorgesehen ist, das durch Berücksichtigung des mindestens einen Störspektrums (r₁, r₂, r₃, r₄) den Einfluss der Störungen (r₁, r₂, r₃, r₄) reduziert,
**dadurch gekennzeichnet, dass** das Mittel (10) zur Erkennung der mindestens einen vorbestimmte Betriebssituation, die Zuführung eines Signals zum Radarsensor (1) ist,
- das den Stillstand des Fahrzeugs (v=0) repräsentiert oder
- das die Erkennung einer für das Fahrzeug geltenden roten Ampel ist, dass mittels einer in Fahrtrichtung orientierten Videokamera im Fahrzeug erzeugt wird
und
- das Aussenden der vorbestimmten Sendesignale (23) und
- das Mitteln der (24, 25, 26) Empfangssignale (5) Startet, wobei wenn die vorbestimmte Betriebssituation erkannt wird, das Aussenden der vorbestimmten Sendesignale zur Sensorkalibrierung gestartet wird und die dann empfangenen Empfangssignale, die an stehenden oder ortsfesten Objekten reflektiert werden, ausgewertet werden und nach Mehrfachreflexionen im Empfangssignal gesucht wird, die zur Ermittlung eines Korrektursignals ausgewertet werden.

10. Radarsensor (1) nach Anspruch 9, **dadurch gekennzeichnet, dass** der Radarsensor (1) mehrere Empfangskanäle (3) aufweist und das Störspektrum (r₁, r₂, r₃, r₄) für jeden Kanal separat erfasst und/oder separat abgespeichert und/oder separat berücksichtigt wird.

11. Radarsensor (1) nach Anspruch 10, **dadurch gekennzeichnet, dass** für jeden der mehreren Empfangskanäle (3) eine separate Speichereinrichtung oder ein separater Bereich einer gemeinsamen Speichereinrichtung vorgesehen ist, in dem für jeden Empfangskanal ein eigenes Störspektrum (r1, r2, r3, r4) abgespeichert ist.

12. Radarsensor (1) nach einem der Ansprüche 9 bis 11, **dadurch gekennzeichnet, dass** der Radarsensor (1) hinter lackierten Karosserieteilen (2) aus Kunststoff angeordnet ist.

## Claims

1. Method for reducing the influence of interference in the evaluation of at least one reception signal (5) of a radar sensor (1) installed in a vehicle, wherein
predetermined transmission signals are emitted in predetermined operating situations and partial signals (5) reflected twice or multiple times are received,
and the signals (5) received for the predetermined operating situations are stored for the purpose of determining an interference spectrum (r₁, r₂, r₃, r₄) and the influence of interference (7, 9) is reduced by taking into account the interference spectrum (r₁, r₂, r₃, r₄) during the signal evaluation, **characterized in that** the predetermined operating situations are the standstill of the vehicle in front of traffic lights, wherein, if the predetermined operating situation is detected, the emission of the predetermined transmission signals for sensor calibration is started and the reception signals which are then received and are reflected at stationary or fixed objects are evaluated and a search is made for multiple reflections in the reception signal, which are evaluated in order to determine a correction signal.

2. Method according to Claim 1, **characterized in that** the method is carried out separately for each reception channel of the radar sensor (1).

3. Method according to Claim 1 or 2, **characterized in that** the radar sensor (1) is arranged behind painted body parts (2) which are produced from plastic.

4. Method according to Claim 3, **characterized in that** the interference (7, 9) is reception signals (5) which arise as a result of multiple reflections (6, 7) between the body part (2) and the sensor radome (4).

5. Method according to one of the preceding claims, **characterized in that** the predetermined transmission signals are signals having an exactly predetermined signal shape and signal power.

6. Method according to one of the preceding claims, **characterized in that** the method is carried out separately for each reception channel of the radar sensor (1).

7. Method according to one of the preceding claims, **characterized in that** the reception signals (5) of the predetermined transmission signals are averaged over a plurality of signal cycles (26).

8. Method according to Claim 7, **characterized in that** the averaged signals are added to the previous correction signal.

9. Radar sensor (1), having devices for reducing the influence of interference (r₁, r₂, r₃, r₄) in the evaluation of at least one reception signal (5) of the radar sensor (1) installed in a vehicle, wherein means (10, 21, 22) are provided and are used to detect at least one predetermined operating situation,
transmission devices are provided and emit predetermined transmission signals when the presence of at least one of the predetermined operating situations is detected, and reception devices (3, 11, 12, 13, 14) are provided and receive partial signals (5) reflected twice or multiple times, and
means (15) are provided, in which at least one interference spectrum (r₁, r₂, r₃, r₄) is stored and in which the signals received for the predetermined operating situations are stored for the purpose of determining the interference spectrum (r₁, r₂, r₃, r₄), and
at least one calculation means (15) is provided and reduces the influence of the interference (r₁, r₂, r₃, r₄) by taking into account the at least one interference spectrum (r₁, r₂, r₃, r₄),
**characterized in that** the means (10) for detecting the at least one predetermined operating situation is the supply of a signal to the radar sensor (1),
- which represents the standstill of the vehicle (v=0), or
- which is the detection of a red traffic light applicable to the vehicle, which is generated in the vehicle by means of a video camera oriented in the direction of travel and starts
- the emission of the predetermined transmission signals (23) and
- the averaging (24, 25, 26) of the reception signals (5),
wherein, if the predetermined operating situation is detected, the emission of the predetermined transmission signals for sensor calibration is started and the reception signals which are then received and are reflected at stationary or fixed objects are evaluated and a search is made for multiple reflections in the reception signal, which are evaluated in order to determine a correction signal.

10. Radar sensor (1) according to Claim 9, **characterized in that in that** the radar sensor (1) has a plurality of reception channels (3) and the interference spectrum (r₁, r₂, r₃, r₄) is detected separately and/or stored separately and/or taken into account separately for each channel.

11. Radar sensor (1) according to Claim 10, **characterized in that** a separate storage device or a separate region of a common storage device is provided for each of the plurality of reception channels (3), in which a separate interference spectrum (r1, r2, r3, r4) is stored for each reception channel.

12. Radar sensor (1) according to one of Claims 9 to 11, **characterized in that** the radar sensor (1) is arranged behind painted body parts (2) made of plastic.

## Revendications

1. Procédé de réduction de l'influence de perturbations lors de l'évaluation d'au moins un signal de réception (5) d'un capteur radar (1) monté dans un véhicule,
dans des situations de fonctionnement prédéterminées, des signaux d'émission prédéterminés étant émis et des signaux partiels (5) réfléchis deux fois ou plus étant reçus
et les signaux (5) reçus pour les situations de fonctionnement prédéterminées étant mémorisés afin de déterminer un spectre de perturbations (r₁, r₂, r₃, r₄) et l'influence des perturbations (7, 9) étant réduite lors de l'évaluation des signaux, en tenant compte du spectre de perturbations (r₁, r₂, r₃, r₄), **caractérisé en ce que** les situations de fonctionnement prédéterminées sont l'arrêt du véhicule devant des feux de signalisation, lorsque la situation de fonctionnement prédéterminée est reconnue, l'émission des signaux d'émission prédéterminés pour l'étalonnage des capteurs étant démarrée et les signaux de réception alors reçus, qui sont réfléchis sur des objets immobiles ou fixes, étant évalués et des réflexions multiples étant recherchées dans le signal de réception, qui sont évaluées pour la détermination d'un signal de correction.

2. Procédé selon la revendication 1, **caractérisé en ce que** le procédé est mis en œuvre séparément pour chaque canal de réception du capteur radar (1).

3. Procédé selon la revendication 1 ou 2, **caractérisé en ce que** le capteur radar (1) est disposé derrière des pièces de carrosserie (2) peintes, lesquelles sont fabriquées en matière plastique.

4. Procédé selon la revendication 3, **caractérisé en ce que** les perturbations (7, 9) sont des signaux de réception (5) qui sont générés par des réflexions multiples (6, 7) entre la partie de carrosserie (2) et le radôme (4) de capteur.

5. Procédé selon l'une des revendications précédentes, **caractérisé en ce que** les signaux d'émission prédéterminés sont des signaux ayant une forme de signal et une puissance de signal prédéterminées avec précision.

6. Procédé selon l'une des revendications précédentes, **caractérisé en ce que** le procédé est mis en œuvre isolément pour chaque canal de réception du capteur radar (1).

7. Procédé selon l'une des revendications précédentes, **caractérisé en ce que** les signaux de réception (5) des signaux d'émission prédéterminés sont moyennés sur plusieurs cycles de signaux (26).

8. Procédé selon la revendication 7, **caractérisé en ce que** les signaux moyennés sont ajoutés au signal de correction précédent.

9. Capteur radar (1), comprenant des dispositifs destinés à réduire l'influence de perturbations (r₁, r₂, r₃, r₄) lors de l'évaluation d'au moins un signal de réception (5) du capteur radar (1) monté dans un véhicule, des moyens (10, 21, 22) étant prévus, à l'aide desquels au moins une situation de fonctionnement prédéfinie est reconnue,
des dispositifs d'émission étant prévus qui, lors de la reconnaissance d'au moins l'une des situations de fonctionnement prédéterminées, émettent des signaux d'émission prédéterminés, et des dispositifs de réception (3, 11, 12, 13, 14) étant prévus qui reçoivent des signaux partiels (5) réfléchis deux fois ou plus, et
des moyens (15) étant prévus, dans lesquels est mémorisé au moins un spectre de perturbations (r₁, r₂, r₃, r₄) et dans lesquels les signaux reçus dans les situations de fonctionnement prédéterminées sont mémorisés en vue de déterminer le spectre de perturbations (r₁, r₂, r₃, r₄) et
au moins un moyen de calcul (15) étant prévu qui, en tenant compte de l'au moins un spectre de perturbations (r₁, r₂, r₃, r₄), réduit l'influence des perturbations (r₁, r₂, r₃, r₄),
**caractérisé en ce que** le moyen (10) destiné à reconnaître l'au moins une situation de fonctionnement prédéterminée est l'envoi au capteur radar (1) d'un signal ,
- qui représente l'immobilisation du véhicule (v=0) ou
- qui est la reconnaissance d'un feu rouge applicable au véhicule, qui est généré au moyen d'une caméra vidéo orientée dans le sens de la marche dans le véhicule
et démarre
- l'émission des signaux d'émission (23) prédéterminés et
- le calcul de la moyenne (24, 25, 26) des signaux de réception (5), lorsque la situation de fonctionnement prédéterminée est reconnue, l'émission des signaux d'émission prédéterminés étant démarrée en vue de l'étalonnage du capteur et les signaux de réception alors reçus, qui sont réfléchis sur des objets immobiles ou fixes, étant évalués et des réflexions multiples étant recherchées dans le signal de réception, lesquelles sont évaluées pour la détermination d'un signal de correction.

10. Capteur radar (1) selon la revendication 9, **caractérisé en ce que** le capteur radar (1) possède plusieurs canaux de réception (3) et le spectre de perturbations (r₁, r₂, r₃, r₄) est acquis séparément et/ou mémorisé séparément et/ou pris en compte séparément pour chaque canal.

11. Capteur radar (1) selon la revendication 10, **caractérisé en ce qu'**un dispositif de mémoire séparé ou une zone séparée d'un dispositif de mémoire commun est prévu(e) pour chacun des multiples canaux de réception (3), dans lequel/laquelle un spectre de perturbations (r1, r2, r3, r4) propre est mémorisé pour chaque canal de réception.

12. Capteur radar (1) selon l'une des revendications 9 à 11, **caractérisé en ce que** le capteur radar (1) est disposé derrière des pièces de carrosserie (2) peintes en matière plastique.
